(19) Europäisches Patentamt
European Patent Office
Office européen des brevets

(11) EP 4 632 332 A1

(12) EUROPEAN PATENT APPLICATION

(43) Date of publication:
15.10.2025 Bulletin 2025/42

(51) International Patent Classification (IPC):
G01F 1/66 (2022.01)    G01F 1/667 (2022.01)
G01F 1/74 (2006.01)

(21) Application number: 25170152.0

(22) Date of filing: 11.04.2025

(52) Cooperative Patent Classification (CPC):
G01F 1/667; G01F 1/662; G01F 1/668; G01F 1/74

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.04.2024  CN 202410444670
14.05.2024  US 202418663117
10.01.2025  CN 202510038212

(71) Applicant: Li, Yanqin
Zhengzhou, Henan 450000 (CN)

(72) Inventors:
• Li, Yanqin
Henan, 450000 (CN)
• Peng, Shuaihao
Zhengzhou, 450001 (CN)

(74) Representative: Herrmann, Daniel
Boehmert & Boehmert
Anwaltspartnerschaft mbB
Pettenkoferstrasse 22
80336 München (DE)

(54) **A NEW ACOUSTIC METHOD TO MEASURE AXIAL FLOW VELOCITY AND FLOWRATE**

(57) The present invention provides a method and system for measuring axial flow velocity or flow rate using two acoustic wave sensors, comprising: a first acoustic wave sensor for emitting a pulse of sound waves and receiving that reflected by the opposite pipe wall; The second acoustic sensor is used to just receive the sound waves; The first acoustic sensor completes the transmitting and receiving functions, forming a first effective sound wave propagation path; The first acoustic sensor and the second acoustic sensor cooperate to form a second effective sound wave propagation path; By combining the sound wave propagation time data of the two effective sound wave propagation paths and the basic formula for measuring axial flow velocity based on the sound ray bending principle, a reconstruction model is constructed to obtain the average axial flow velocity of the measured fluid, which can further be used to calculate the flow rate. This method and system do not require knowledge of parameters such as temperature and pressure of the tested fluid to determine its static sound speed (Laplacian sound speed); In addition, compared to the widely used time difference method for the traditional ultrasound flow meter, this method has higher accuracy, and the higher the flow velocity and the more uniform the temperature distribution of the fluid medium, the more reliable the measurement results, and the more prominent its advantages.

Nevertheless, if the static sound speed of the fluid across the cross-section in the flow channel, to be measured, is available by reliably measuring its temperature and pressure, etc., or by directly measuring itself, the preceding acoustic measurement system can be reduced to just contain a single acoustic sensor, i.e. the first acoustic sensor, to effectively measure the axial velocity or flowrate.

FIG. 2

**Description**

Technical field

The present invention relates to the field of fluid measurement technology, specifically to a method and system for measuring axial flow velocity or flow rate by acoustic method.

Background technology

The velocity and flow rate inside pipelines, jets, or containers are important or critical technical parameters for a large number of industrial and scientific applications, requiring effective and reliable measurement methods. The sonic method is a suitable and advanced measurement technique.

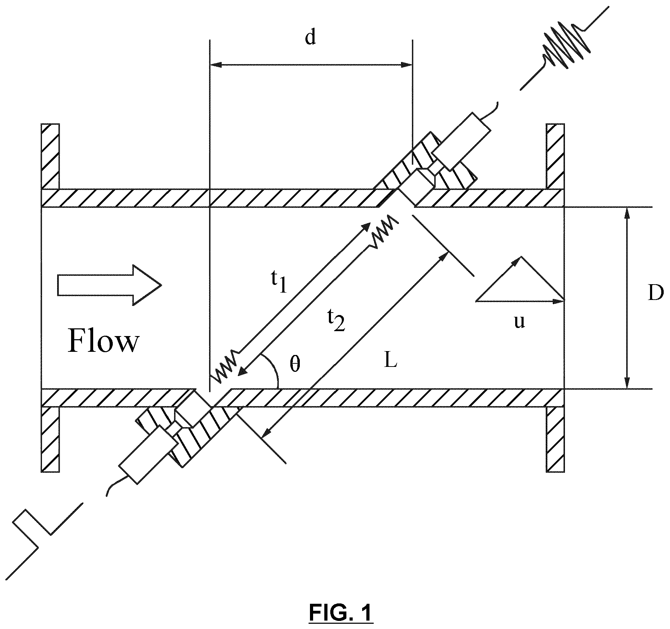

The time difference method is a commonly used flow velocity and flowrate measurement method internationally. This method uses a pair of acoustic sensors arranged along the up- and down-stream, respectively, of the pipeline to be tested. By measuring the propagation time between the two acoustic sensors in the opposite directions, the pipeline flow rate can be effectively measured. However, there are corresponding system approximation errors, and the larger the flow velocity inside the pipeline, the larger the system error of this traditional method. The principle of the traditional time difference method is shown in Figure 1, and the calculation formulas are shown in equations (7) to (10).

$$
\begin{aligned}
t_1 + t_2 &= \int_l \frac{1}{c(x,y) + \vec{p}(x,y) \cdot \vec{u}(x,y)} \, ds + \int_l \frac{1}{c(x,y) - \vec{p}(x,y) \cdot \vec{u}(x,y)} \, ds \\
&= \int_l \frac{2c(x,y)}{(c(x,y))^2 - (\vec{p}(x,y) \cdot \vec{u}(x,y))^2} \, ds \\
&\approx \int_l \frac{2c(x,y)}{(c(x,y))^2} \, ds, \ u(x,y) \ll c(x,y) \\
&\approx \int_{l_{line}} \frac{2}{c(x,y)} \, ds, \ \text{acoustic path bending omitted}
\end{aligned}
\qquad , \quad (7)
$$

$$
\overline{c(x,y)} \approx \frac{2L}{t_1 + t_2} , \qquad (8)
$$

$$
\begin{aligned}
t_1 - t_2 &= \int_l \frac{1}{c(x,y) + \vec{p}(x,y) \cdot \vec{u}(x,y)} \, ds - \int_l \frac{1}{c(x,y) - \vec{p}(x,y) \cdot \vec{u}(x,y)} \, ds \\
&= \int_l \frac{-2\vec{p}(x,y) \cdot \vec{u}(x,y)}{(c(x,y))^2 - (\vec{p}(x,y) \cdot \vec{u}(x,y))^2} \, ds \\
&\approx \int_l \frac{-2\vec{p}(x,y) \cdot \vec{u}(x,y)}{(c(x,y))^2} \, ds, \ u(x,y) \ll c(x,y) \\
&\approx \int_l \frac{-2u(x,y)\cos\theta}{(c(x,y))^2} \, ds, \ \text{acoustic path bending omitted}
\end{aligned}
\qquad , \quad (9)
$$

$$\overline{u} \approx -\frac{(t_1 - t_2)}{2L\cos\theta}\overline{c(x,y)}^2 = \frac{(t_1 - t_2)}{2\Delta Y}\overline{c(x,y)}^2 \quad . \tag{10}$$

Among them, $\overline{\overset{\mathbf{u}}{p(x,y)}}$ is the direction vector of the sound propagation path, and the top line of the variable represents the average value. From the above time difference method, it can be seen that on the one hand, the bending of the acoustic path caused by the axial flow velocity of the medium is ignored, resulting in corresponding errors. There are also errors caused by the neglect of the term $\overline{(\overset{\mathbf{u}}{p(x,y)} \cdot \overset{\mathbf{1}}{u(x,y)})^2}$ in the derivation process, where the larger the flow velocity u, the greater the error of this term. In contrast, the measurement reconstruction models (equations (1) to (6)) disclosed in the present invention do not have corresponding errors. They decompose the static sound velocity c and flow velocity u in the field into radial and axial components along the cross-section, and perform linear integration along the sound path accordingly, thus eliminating the corresponding system errors mentioned above.

On the other hand, the inventor's earlier work has achieved preliminary reconstruction of pipeline flow velocity and flowrate measurement based on information on acoustic path bending (i.e. acoustic ray bending method), which can be referred to in the international patent application number PCT/CN2018/108837 (same group of patents: USA 10739174 B2, ZL201880010719.X, Japan 7032842, EP 3835731). The method and system for measuring axial flow velocity distribution and flow rate inside a pipeline using acoustic wave method have been disclosed. A method and system for arranging a certain number of acoustic sensors on a single cross-section of the pipeline to be tested, calculating the axial flow velocity distribution inside the cross-section through a certain reconstruction algorithm, and reliably obtaining the pipeline flow rate have been developed. However, this method assumes that the temperature, pressure, and other conditions of the medium to be tested are known, so the static sound velocity of the medium is known, or it can be directly measured. In reality, the static sound velocity of the fluid medium inside the pipeline or any other fluid flow channel to be tested is generally unknown and difficult to accurately and reliably measure; In addition, for the method disclosed in PCT/CN2018/108837 patent, in most practical industrial applications, it is not necessary to know the axial velocity distribution across the cross-section of the pipeline, only to measure the flow rate of the medium inside the pipeline. Furthermore, in general, the axial flow velocity of a pipeline does not change significantly across the cross-section, or even if there is a significant change, the average flow velocity along the diameter line segment is close enough to the average flow velocity across the entire cross-section to effectively replace the latter and further calculate the flow rate to be measured.

The basic formula for measuring axial flow velocity and flow rate based on the acoustic ray bending method is equation (11):

$$\overline{u} = \sqrt{c^2 - \left(\frac{L}{t}\right)^2} \tag{11}$$

where L is the straight-line distance from the transmitting end to the receiving end of the sound wave signal, t is the propagation time of the sound wave from the transmitting end to the receiving end, and c is the propagation speed of the sound wave under static conditions of the fluid medium in the pipe to be measured. Basically, the acousic sensor can be a single one, which completes both transmission and reception, and forms a sound wave propagation path through the reflection of the opposite wall of the flow channel; The acoustic sensors can also be two, installed on both sides of the flow channel symmetrically about the axis, to complete the transmission and reception of sound wave signals.

The static sound speed of the medium in formula (11) is determined by parameters such as temperature and pressure of the fluid medium. Therefore, when these parameters are unknown, the static sound speed c is correspondingly unknown, or else, it is not applicable to directly measure. Then, formula (11) has two unknown variables, u and c, and correspondingly requires two or more measurement data to solve. The method disclosed in the present invention forms two effective sound paths, corresponding to two measurement time data, thereby enabling effective simultaneous measurement of the static sound speed and axial flow velocity of the measured medium with unknown parameters such as temperature and pressure, and further calculation of the flow rate.

Compared with the traditional time difference method, the latter requires two measuring acoustic sensors to emit sound waves relative to each other and receive sound wave signals separately; The acoustic wave method for measuring the axial flow velocity distribution of a single cross-section has been described above (PCT patent number: In PCT/CN2018/108837, each sound path also requires a acoustic sensor to emit sound waves, and a acoustic sensor at the other end to receive sound signals; Related to this, the applicant has applied for a patent (US 18/663117; CN 20241044670.6) and disclosed a system for measuring the average flow velocity and flow rate in a pipe using a single acoustic sensor. Under known conditions such as temperature and pressure of the medium inside the pipeline, the static sound velocity c of the medium can be determined. Based on the aforementioned formula (11), the calculation of the average axial flow velocity can be achieved, and the flow rate can ultimately be calculated.

In summary, the acoustic ray bending method is relatively more accurate, the system is relatively simplified, and it is more in line with practical needs. Therefore, how to effectively measure the flow velocity or flow rate inside the pipe under the premise of unknown parameters such as fluid medium temperature and pressure is an urgent technical problem that needs to be solved.

To address the aforementioned issues, people have been seeking an ideal technological solution.

Summary

The purpose of the present invention is to address the shortcomings of the existing technology and provide a method and system for measuring axial flow velocity or flow rate using acoustic method, which does not require knowledge of parameters such as temperature and pressure of the medium to be measured, provides more accurate measurement results, and has more obvious advantages as the flow rate increases.

In order to achieve the above objectives, the technical solution adopted by the present invention is:

The method disclosed in the present invention, based on the principle of acoustic ray bending, measures and reconstructs the flow velocity or flow rate of pipelines or jets when parameters such as temperature and pressure of the medium to be measured are unknown. The theoretical model constructed has corresponding important innovation and solves the problems that have not been solved by existing methods. This makes the axial flow velocity or flow rate measurement method based on acoustic ray bending principle more applicable and truly applicable, enabling its fundamental advantages to be directly and effectively enlightened.

Specifically, in most cases, the variation of axial flow velocity along the cross-section of the pipeline is not significant, so the average axial flow velocity along a certain diameter line segment can approximately represent the average flow velocity across the entire cross-section. Sometimes the special properties of the medium inside a horizontal pipeline can cause changes in the flow velocity value along the vertical direction within the cross-section. In this case, the average flow velocity along the diameter in the vertical direction is generally closer to the average flow velocity of the cross-section.

Therefore, taking the effective cross-section of the pipeline mentioned above, the reflected sound wave path from the opposite wall and a certain inclined sound wave path along the axis can be formed about this cross-section. Based on the acoustic ray bending method mentioned above, the average flow velocity on the cross-section of the measurement area can be effectively solved under unknown parameters such as pipeline medium temperature and pressure, and the flow rate can be calculated accordingly.

Specifically, the present invention provides a method for measuring the axial flow velocity or flow rate using acoustic sensors, comprising:

The first acoustic wave sensor has the function to emit and receive acoustic waves, and is set on one side of the cross-section to be measured in the fluid flow channel, used to emit acoustic waves to the fluid and receive the reflected waves;

The second acoustic wave sensor has the function to receive acoustic waves transmitted from the first acoustic sensor. It is located on the opposite or the same side of the fluid flow channel as the first acoustic wave sensor, and is offset by a certain distance along the axial direction relative to the cross-section where the first acoustic wave sensor is located. It is used to receive the acoustic waves emitted by the first acoustic wave sensor;

The sound waves emitted by the first acoustic sensor are reflected by the opposite wall of the fluid flow channel and received by the first acoustic sensor, forming a first effective sound wave propagation path along the cross-section to be measured;

The sound waves emitted by the first acoustic sensor are received by the second acoustic sensor on the opposite side, or reflected by the wall of the fluid flow channel on the opposite side and received by the second sound wave sensor installed on the same side, forming a second effective sound wave propagation path, which is an inclined path; By combining the sound wave propagation time of the first effective sound wave propagation path and the sound wave propagation time of the second effective sound wave propagation path, and based on the principle of acoustic ray bending, a reconstruction model is constructed. At the same time, the static sound speed and axial flow velocity of the reconstructed medium are simultaneously measured, and the flow rate can be further calculated by combining the cross-sectional area of the measurement area.

Based on the above, the formula for constructing the reconstruction model algorithm is expressed as follows:

$$t_{AC} = \int_{l_{AB}} \frac{1}{c_{i,xy}(x,y)} dl \qquad (1)$$

$$\Delta Y = \int_{t_{AC}} (c_{i,z}(x,y) + u(x,y)) dt \qquad (2)$$

$$c(x,y)^2 = c_{i,xy}(x,y)^2 + c_{i,z}(x,y)^2 \qquad (3)$$

$$t_{AB} = \int_{l_{AB}} \frac{1}{c_{xy}(x,y)} dl \qquad (4)$$

$$\int_{l_{AB}} u(x,y) dl = -\int_{l_{AB}} c_z(x,y) dl \qquad (5)$$

$$c(x,y)^2 = c_{xy}(x,y)^2 + c_z(x,y)^2 \qquad (6)$$

Among them, x, y and z represent the horizontal and vertical coordinates of the Cartesian coordinate system within the cross-section of the measurement area, and that along the axial direction of the channel, respectively;

$t_{AC}$ represents the time it takes for the sound waves emitted by the first sound wave sensor to propagate to the second sound wave sensor;

$\Delta Y$ represents the axial offset distance of the installation position of the second acoustic wave sensor relative to the cross-section where the first acoustic wave sensor is located;

$c(x,y)$ represents the sound wave propagation velocity in the fluid medium under static conditions in the flow channel, $c_{i,xy}(x,y)$ are the radial components of the static sound velocity of the medium along the inclining curved sound path projected to the cross-section, and $c_{i,z}(x,y)$ are the axial components of the static sound velocity of the medium along the inclined sound path; $c_{xy}(x,y)$ is the radial component of the static sound velocity of the medium along the axially curved sound path across the cross-sectional direction, and $c_z(x,y)$ is the axial component of the static sound velocity of the medium along the axially curved sound path across the cross-sectional direction;

$t_{AB}$ represents the time it takes for the sound waves emitted by the first sound wave sensor to propagate to the opposite wall and reflect back to the first acoustic sensor;

$l_{AB}$ represents the linear integral path of the transverse (radial or cross-sectional) direction sound path or the projection along the transverse section corresponding to the inclined or oblique sound path;

$u(x,y)$ represents the axial flow velocity of the measured fluid medium in the flow channel under the measured flow state;

When there is only one effective path for both the first and second acoustic paths, the measured static sound speed and flow velocity of the reconstructed medium are the average values across the measured cross-section.

If the static sound speed of the fluid is available by reliably measuring its temperature and pressure, etc., or apt to be directly measured, the acoustic measurement method of claim 1 can be reduced to just contain a single acoustic sensor, i.e. the first acoustic sensor, to effectively measure the axial velocity or further the flowrate. The same applies to claim 7.

As mentioned above, the fluid flow channel is a circular or a rectangular pipe, or a jet.

If it is a rectangular cross-section pipeline and the axial flow velocity and other parameters are evenly distributed across the cross-section, in addition to selecting the axial cross-section located at the center, it is also possible to choose an axial cross-section that deviates from the center of the pipeline to arrange the acoustic sensors, based on the above principles. Then the propagation times of sound waves can be measured and the flow velocity and further the flow rate can be reconstructed.

Based on the above, the first acoustic sensor and the second acoustic sensor are installed in the inner or on the outer wall of the fluid flow channel.

A system for measuring axial flow velocity or flow rate using acoustic sensors, comprising an acoustic signal data processing module, a first acoustic sensor, and a second acoustic sensor;

The first acoustic sensor has the function to emit and receive acoustic waves, and is located on one side of the cross-section to be measured in the fluid flow channel, for emitting acoustic waves to the fluid and receiving the reflected waves;

The second acoustic wave sensor has the function to receive acoustic waves. It is located on the opposite or same side of the fluid flow channel as the first acoustic wave sensor, and is offset by a certain distance along the axial direction relative to the cross-section where the first acoustic wave sensor is located. It is used to receive the acoustic waves emitted by the first acoustic wave sensor;

The sound waves emitted by the first sound wave sensor are reflected by the opposite wall in the fluid flow channel and received by the first sound wave sensor, forming a first effective sound wave propagation path;

The sound waves emitted by the first acoustic sensor are received by the second sound wave sensor on the opposite side, or reflected by the wall of the fluid flow channel on the opposite side and received by the second acoustic sensor on the same side, forming a second effective sound wave propagation path;

The sound signal data processing module is used to collect signals from the first acoustic sensor and the second acoustic sensor.

Based on the above, the sound signal data processing module is equipped with a reconstruction program for processing the signals collected from the first and second sound wave sensors respectively. The formula for the reconstruction model algorithm is expressed as follows:

$$t_{AC} = \int_{l_{AB}} \frac{1}{c_{i,xy}(x,y)} dl \qquad (1)$$

$$\Delta Y = \int_{t_{AC}} (c_{i,z}(x,y) + u(x,y)) dt \qquad (2)$$

$$c(x,y)^2 = c_{i,xy}(x,y)^2 + c_{i,z}(x,y)^2 \qquad (3)$$

$$t_{AB} = \int_{l_{AB}} \frac{1}{c_{xy}(x,y)} dl \qquad (4)$$

$$\int_{l_{AB}} u(x,y) dl = -\int_{l_{AB}} c_z(x,y) dl \qquad (5)$$

$$c(x,y)^2 = c_{xy}(x,y)^2 + c_z(x,y)^2 \qquad (6)$$

Among them, x, y and z represent the horizontal and vertical coordinates of the Cartesian coordinate system within the cross-section of the measurement area, and that along the axial direction of the channel, respectively;

$t_{AC}$ represents the time it takes for the sound waves emitted by the first sound wave sensor to propagate to the second sound wave sensor;

$\Delta Y$ represents the axial offset distance of the installation position of the second acoustic wave sensor relative to the cross-section where the first acoustic wave sensor is located;

$c(x,y)$ represents the sound wave propagation velocity in the fluid medium under static conditions in the flow channel, $c_{i,xy}(x,y)$ are the radial components of the static sound velocity of the medium along the inclining curved sound path projected to the cross-section, and $c_{i,z}(x,y)$ are the axial components of the static sound velocity of the medium along the inclined sound path; $c_{xy}(x,y)$ is the radial component of the static sound velocity of the medium along the axially curved sound path across the cross-sectional direction, and $c_z(x,y)$ is the axial component of the static sound velocity of the medium along the axially curved sound path across the cross-sectional direction;

$t_{AB}$ represents the time it takes for the sound waves emitted by the first sound wave sensor to propagate to the opposite wall and reflect back to the first acoustic sensor;

$l_{AB}$ represents the linear integral path of the transverse (radial or cross-sectional) direction sound path or the projection along the transverse section corresponding to the inclined or oblique sound path;

$u(x,y)$ represents the axial flow velocity of the measured fluid medium in the flow channel under the measured flow state.

As mentioned above, the fluid flow channel is a circular or rectangular pipe, or a jet.

When the fluid flow channel is a jet used for measuring jet velocity or flow rate, it further comprises a third acoustic sensor, which is arranged on the opposite side of the cross-section relative to the first acoustic sensor.

Based on the above, the first acoustic sensor and the second acoustic sensor are installed in the inner or on the outer wall of the fluid flow channel.

The present invention has outstanding substantive features and significant progress compared to the prior art. Specifically, the present invention utilizes the transmission and reception capabilities of the first acoustic wave sensor to synchronously complete the transmission and reception of the first acoustic wave, and uses the second acoustic wave sensor in conjunction with the first acoustic wave sensor to complete the transmission and reception of the second acoustic wave. The path length and time of the two acoustic wave signals are different, and a certain geometric position relationship is formed based on the structure of the fluid flow channel. Then, the reconstruction model algorithm is constructed by combining the acoustic ray bending method and geometric relationship formula, so that even under the condition of unknown parameters such as fluid medium temperature and pressure in the fluid flow channel, the average flow velocity on the cross-section of the measurement area can be effectively solved, and the flow rate can be further calculated by combining the cross-sectional area.

By contrast, when the static sound speed of the measured fluid is available by reliably measuring its temperature and pressure, etc., or can be directly measured, the preceding acoustic measurement system can be reduced to just contain a single acoustic sensor, i.e. the first acoustic sensor, to effectively measure the axial velocity or further the flowrate.

Compared to traditional methods, the accuracy of the present invention is higher, especially in situations where the flow rate is higher.

Brief description of the drawing

Figure 1 is a schematic diagram of the traditional time difference method for flow measurement as a comparison.

Figure 2 is a schematic diagram of the system for simultaneously measuring and reconstructing static sound velocity and flow velocity based on the sound ray bending method in the present invention.

Figure 3 is a schematic diagram of the same side installation system of the sound sensor for simultaneously measuring static sound velocity and flow velocity based on the sound ray bending method in the present invention.

Figure 4A is a comparison charts of the results of the new method and the traditional time difference method for operating condition 1 in the present invention.

Figure 5A is a comparison chart of the results of the new method and the traditional time difference method for operating condition 2 in the present invention.

Figure 6A is a comparison chart of the results of the new method and the traditional time difference method for operating condition 3 in the present invention.

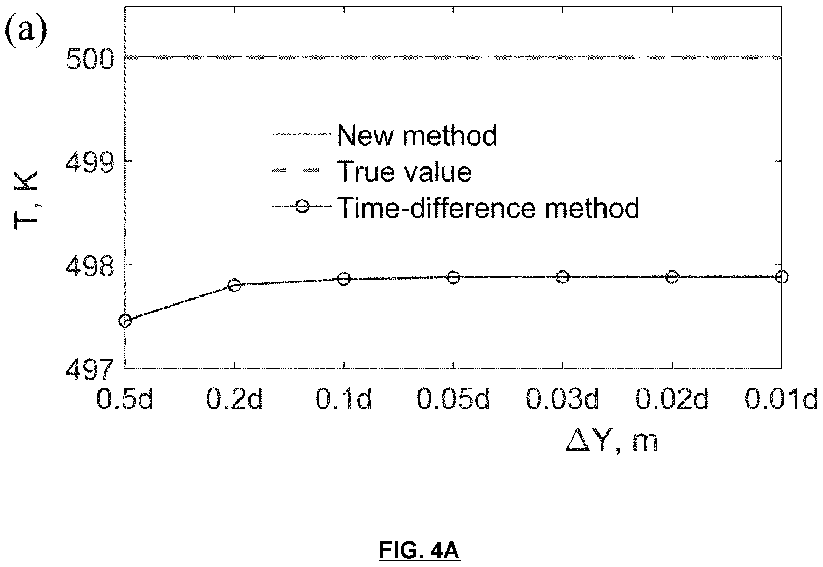

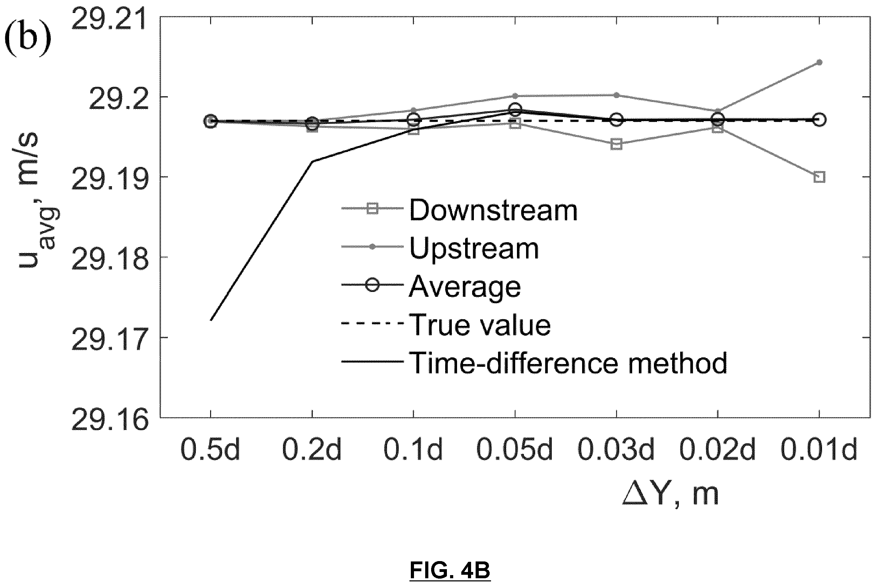

The reconstruction results are compared in Figures 4, 5 and 6. Figure 4A, 5A and 6A each shows a temperature comparison, and Figures 4B, 5B and 6B each give the flow velocity comparison.

Detailed description

The technical solution of the present invention will be further described in detail through specific implementation methods.

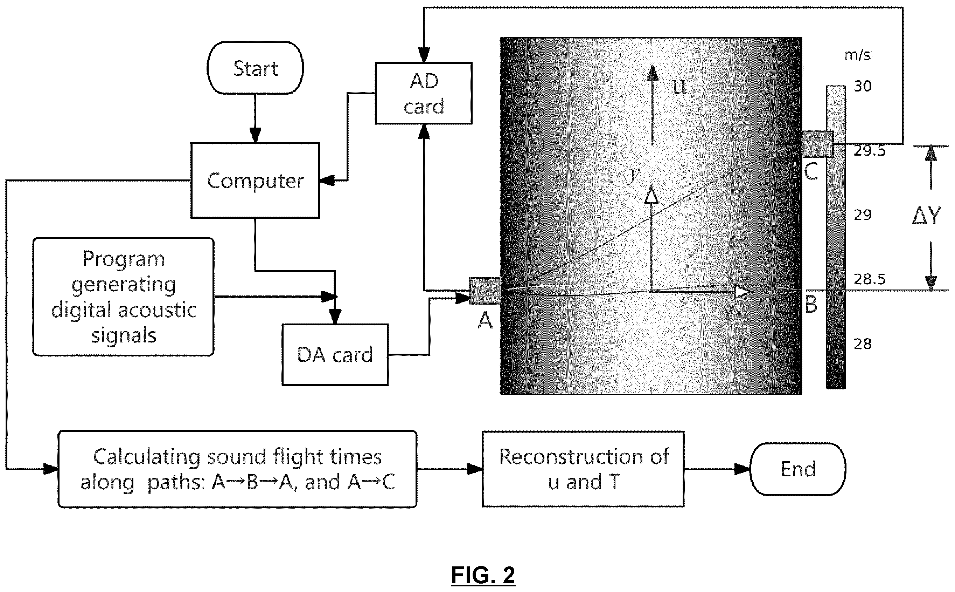

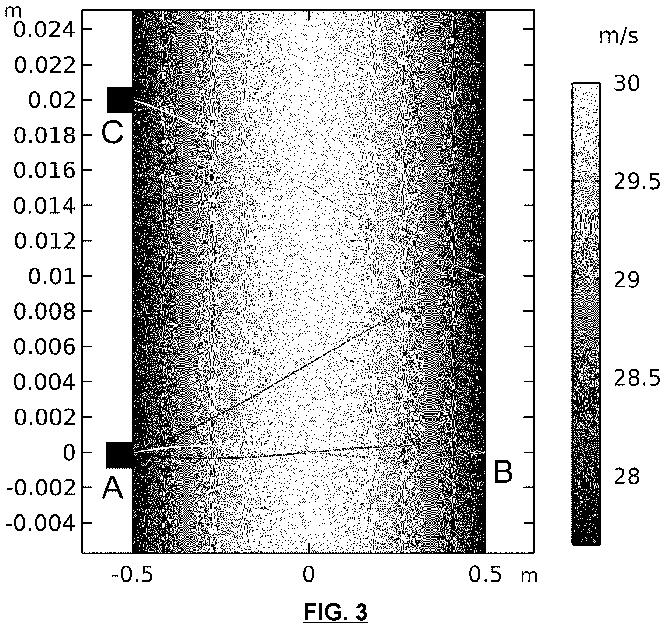

As shown in Figures 2 and 3, taking a circular tube as an example, the vertical direction is stretched 50 times to fully demonstrate the distribution characteristics of curved sound rays in the flow field.

Specifically, A in the figure is the installation position of the first acoustic sensor, B is a position on the other side of the cross-section to be measured, and C is the installation position of the second acoustic sensor.

The first sound wave sensor emits sound waves from point A, reflects off the opposite inner wall of the pipeline at point B, and then returns to point A where it is received by the first sound wave sensor, forming the first effective sound wave propagation path.

As shown in Figure 2, the first sound wave sensor emits sound waves from point A and is directly received by the second sound wave sensor at point C, forming a second effective sound wave propagation path.

As shown in Figure 3, it is another embodiment where the first acoustic sensor emits acoustic waves from point A, which are reflected by the opposite inner wall of the pipeline and then received by the second acoustic sensor at point C, forming a second effective acoustic wave propagation path. In this case, the acoustic sensor offset along the axial direction also needs to be reflected by the opposite side wall. The advantage is that it can reduce the measurement error of the axial offset path, making the expected measurement and reconstruction of this new method more accurate and reliable.

Meanwhile, due to the fact that the second effective sound wave propagation path is a path with a certain axial deviation, in terms of planar geometry, the positions of A, B, and C can form a geometric relationship of a right triangle.

The combination of the second effective sound wave propagation path and the first effective sound wave path can effectively solve the average flow velocity at the cross-section to be measured based on the sound line bending method, under the condition of unknown parameters such as pipeline medium temperature and pressure, and further calculate the flow rate.

The formula for the reconstruction model algorithm is expressed as follows:

$$t_{AC} = \int_{l_{AB}} \frac{1}{c_{i,xy}(x,y)} dl \tag{1}$$

$$\Delta Y = \int_{t_{AC}} (c_{i,z}(x,y) + u(x,y)) dt \tag{2}$$

$$c(x,y)^2 = c_{i,xy}(x,y)^2 + c_{i,z}(x,y)^2 \tag{3}$$

$$t_{AB} = \int_{l_{AB}} \frac{1}{c_{xy}(x,y)} dl \tag{4}$$

$$\int_{l_{AB}} u(x,y) dl = -\int_{l_{AB}} c_z(x,y) dl \tag{5}$$

$$c(x,y)^2 = c_{xy}(x,y)^2 + c_z(x,y)^2 \tag{6}$$

Among them, x, y and z represent the horizontal and vertical coordinates of the Cartesian coordinate system within the cross-section of the measurement area, and that along the axial direction of the channel, respectively;

$t_{AC}$ represents the time it takes for the sound waves emitted by the first sound wave sensor to propagate to the second sound wave sensor;

$\Delta Y$ represents the axial offset distance of the installation position of the second acoustic wave sensor relative to the cross-section where the first acoustic wave sensor is located;

$c(x,y)$ represents the sound wave propagation velocity in the fluid medium under static conditions in the flow channel, $c_{i,xy}(x,y)$ are the radial components of the static sound velocity of the medium along the inclining curved sound path projected (or mapping) to the cross-section, and $c_{i,z}(x,y)$ are the axial components of the static sound velocity of the medium along the inclined sound path; $c_{xy}(x,y)$ is the radial component of the static sound velocity of the medium along the axially curved sound path across the cross-sectional direction, and $c_z(x,y)$ is the axial component of the static sound velocity of the medium along the axially curved sound path across the cross-sectional direction;

$t_{AB}$ represents the time it takes for the sound waves emitted by the first sound wave sensor to propagate to the opposite wall and reflect back to the first acoustic sensor;

$l_{AB}$ represents the linear integral path of the transverse (radial or cross-sectional) direction sound path or the projection along the transverse section corresponding to the inclined or oblique sound path;
*u(x,y)* represents the axial flow velocity of the measured fluid medium in the flow channel under the measured flow state.

For the model, 6 unknowns with 6 equations can effectively be solved for the problem, so that the static sound velocity c and flow velocity u of the medium can be reconstructed simultaneously, and further the pipeline flow rate can be calculated based on the solved flow velocity u and the cross-sectional area of the pipeline to be measured.

This embodiment takes the measurement of a gas pipeline as an example, and takes three typical working conditions to illustrate the feasibility and reliability of the method. The specific results are given in Table 1, and the coordinates are shown in Figure 2. The reconstructed results obtained by directly reconstructing the static flow velocity c and axial flow velocity u of the medium through two acoustic paths and based on the reconstruction model, equations (1) to (6), mentioned above; In contrast, the model equations of the traditional time difference method are equations (7) to (10).

In this embodiment, the fluid medium inside the tube is air, which is an ideal gas under the specified operating conditions. The diameter of the pipe is D. After reconstructing the static sound velocity *c*, as well as the flow velocity u, of the medium from the above model, the medium temperature *T* can be calculated using the formula $T(x, y) = c(x, y)^2 / (\gamma R)$, where $\gamma$ is the specific heat ratio of the medium gas and R is the gas constant.

Please be noted that these examples also work for the measurement of particle concentration of the two phase flow to be measured, based on the reconstructed static sound velocity in the two phase flow to be measured.

In the following discussion, the method executed in this embodiment is referred to as the "new method".

Table 1 Basic Numerical Experimental Model Parameters

| Case | u, m/s | $\Delta Y/D$ | T,K | p, atm | D, m |
|---|---|---|---|---|---|
| 1 | $u = 10 + 20e^{-\frac{x^2}{2}}$ | 0.5, 0.2, 0.1, 0.05 , 0.03, 0.02, 0.01 | 500 | 1 | 1 |
| 2 | $u = 30 + 50e^{-\frac{x^2}{2}}$ | 0.5, 0.1, 0.01 | | | |
| 3 | $u = 5 + 15e^{-\frac{(x-0.1)^2}{2}}$ | 0.5, 0.1, 0.01 | $T = 250 + 250e^{-\frac{(x-0.05)^2}{5}}$ | | |

(1) Results and analysis of Case 1

The sound wave propagation time data of the inclined path AC with different axial offset distances $\Delta Y$ for this operating case are shown in Table 2, and the unidirectional propagation time of the horizontal path: A→B is 0.00223579288 s. The comparison of the corresponding reconstruction results is shown in Figure 4. Figure 4A shows temperature comparison, and Figure 4B shows flow velocity comparison.

Table 2 Propagation times of the two paths in Case 1

| $\Delta Y/D$ | $\Delta t$, s | |
|---|---|---|
| | A→C | A←C |
| 0.5 | 0.002427783 | 0.002573732 |
| 0.2 | 0.002251068 | 0.002309447 |
| 0.1 | 0.002232397 | 0.002261587 |
| 0.05 | 0.0022313004 | 0.002245896 |
| 0.03 | 0.002232425 | 0.002241182 |
| 0.02 | 0.002233323 | 0.002239161 |
| 0.01 | 0.002234446 | 0.002237365 |

From the results, it can be seen that the temperature measured by the new method has negligible errors; The reconstructed values by the traditional time difference method is relatively low. The new method for measuring and reconstructing flow velocity has a relatively small error compared to the traditional time difference method, especially the average value of the positive and inverse direction measurement results. Moreover, when the axial offset of the two sensors is appropriately small, the reconstruction error is sufficiently small.

On the other hand, the results measured by the new method are relatively more stable, especially for temperature, with an overall error of ~0.0001%. For instance, when the axial deviation is 0.02D, the reconstruction error is about 0.43%.

(2) Results and analysis of Case 2

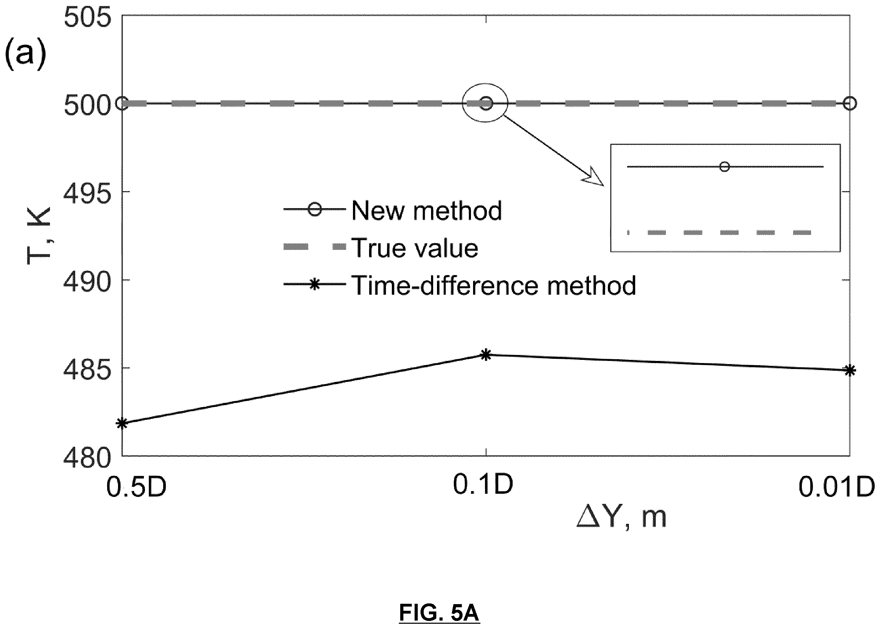

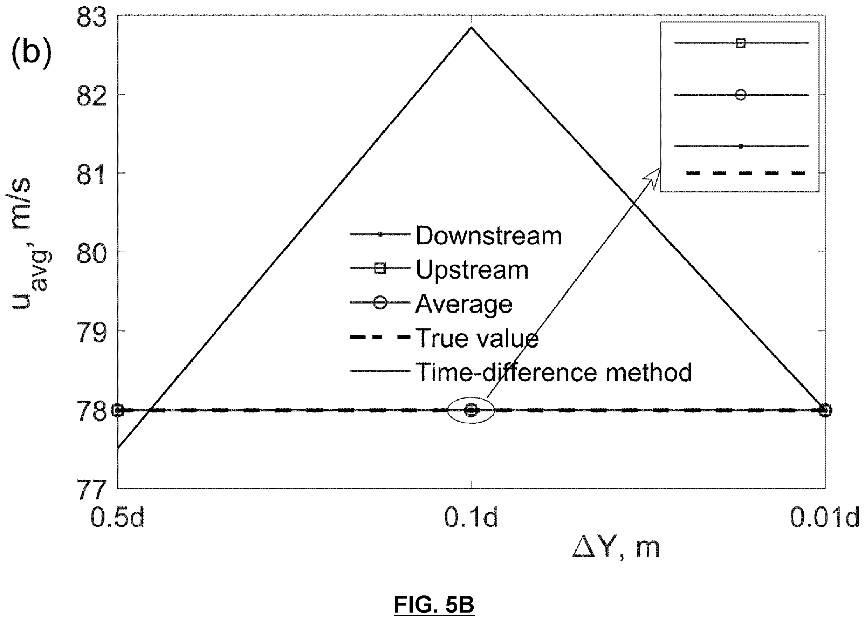

Compared to Case 1, Case 2 shows a significant increase in flow velocity while maintaining the same medium temperature. The sound wave propagation time data of the inclined path AC with different axial offset distances $\Delta Y$ are shown in Table 3, and the unidirectional propagation time of the horizontal path: A-B is 0.0022656067 s. The comparison of the reconstruction results of the two methods for this operating case is shown in Figure 5. Figure 5A shows temperature comparison, and Figure 5B shows flow velocity comparison.

Table 3 Propagation time data of the two paths in operating case 2

| $\Delta Y/D$ | $\Delta t$, s | |
|---|---|---|
| | A→C | A←C |
| 0.5 | 0.0023407549 | 0.0027410845 |
| 0.1 | 0.002232397 | 0.002317292 |
| 0.01 | 0.0022617202 | 0.0022697268 |

The results show that when the flow velocity is relatively high, the new method has more accurate and stable reconstruction results for temperature and flow velocity, compared to operating condition 1. Moreover, the difference of results between the forward and reverse propagation of the inclined path are sufficiently small, and the average of the two is also sufficiently small; Meanwhile, the traditional time difference method results in relatively poor accuracy and stability when the flow velocity is relatively high. For the temperature reconstruction error: New method,~0.000085%; Time difference method ($\Delta Y/D$ = 0.01),~3.12%.

(3) Results and analysis of Case 3

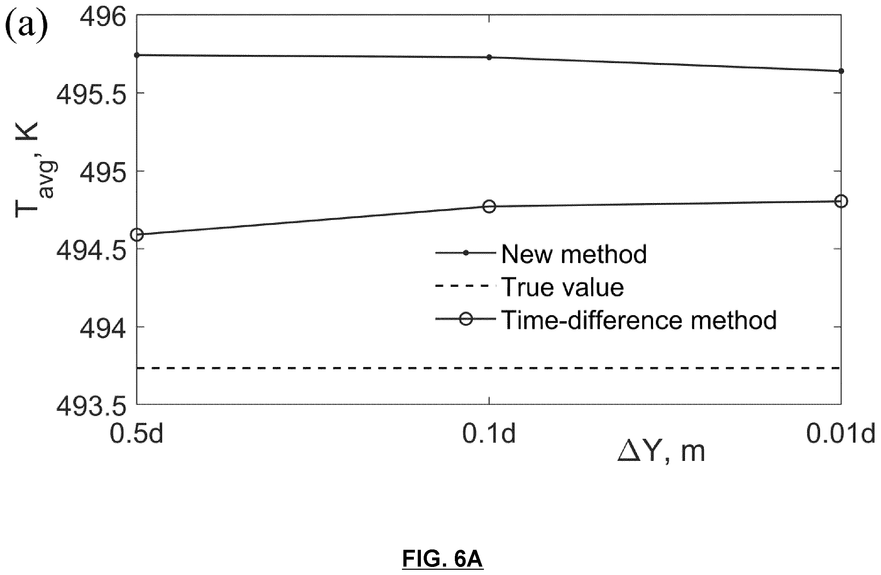

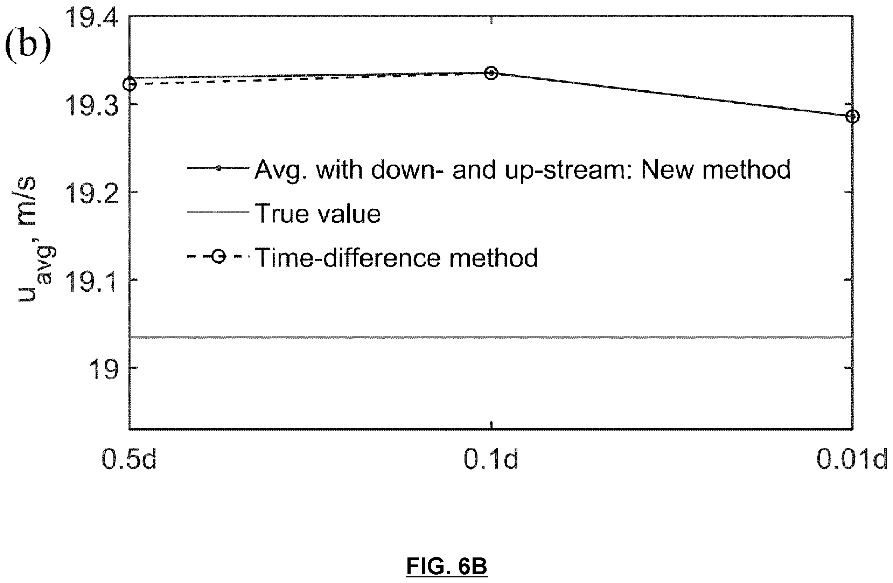

Compared to the first two working conditions, the temperature varies across the pipeline cross-section in this working condition, and the model is set in three dimensions accordingly, that is, both temperature and flow velocity vary across the cross-section. The propagation time data of the inclined path AC with different axial offset distances $\Delta Y$ are shown in Table 4, while the unidirectional propagation time of the horizontal path: A→B is 0.00224269 s. The corresponding reconstruction results are compared in Figure 6. Figure 6A shows temperature comparison, and Figure 6B gives the flow velocity comparison.

Table 4: Propagation time data of the two paths under Case 3

| $\Delta Y/D$ | $\Delta t$, s | |
|---|---|---|
| | A→C | A←C |
| 0.5 | 0.00245926 | 0.00255648 |
| 0.1 | 0.00224417 | 0.00226362 |
| 0.01 | 0.00224183 | 0.00224377 |

From the reconstruction results of Case 3, it can be seen that when there is a certain spatial variation in the temperature across the pipeline cross-section, the reconstruction results of the new method disclosed in the present invention do not show advantages compared to the traditional time difference method. On the contrary, the temperature reconstruction results have relatively larger errors. By analysis, the reason is that during the sound wave propagation, except the influence by the axial flow velocity of the medium to cause axial bending, it is also affected by the radial temperature changes, which result in corresponding bending along the radial direction within the cross-section. Therefore, additional errors are generated in the measurement, however, such errors can be overcome by an optimal reconstruction algorithm as much as possible. After all, in most applications, there is no significant change in temperature across the cross-section of the pipeline. At this point, this new method will be able to provide significantly more accurate and reliable measurement results compared to the traditional time difference method, especially in relatively high flow rates.

It should be noted that the method and system disclosed in the present invention are not limited to the air medium and circular pipelines involved in the embodiments, but can be applied to reliable measurement of flow velocity and flow rate in various pipeline flows such as gas phase, liquid phase, and multiphase flow, etc.

In other embodiments, the fluid flow channel is a jet, and when used to measure the jet flow velocity or flow rate, it further includes a third acoustic sensor, which is disposed on the opposite side of the cross-section relative to the first acoustic sensor. The three acoustic sensors are respectively installed at points A, B, and C as shown in Figure 2.

Finally, it should be noted that the above embodiments are only used to illustrate the technical projection of the present invention and not to limit it; Although the present invention has been described in detail with reference to the preferred embodiments, those of ordinary skill in the art should understand that modifications can still be made to the specific embodiments of the present invention or equivalent substitutions can be made to some technical features, including for application objects where the static sound velocity and medium flow velocity in the cross-section of the flow channel vary significantly along the space, based on the principles and models disclosed in the present invention, the two acoustic sensors are extended into two layers of acoustic sensors along the axial direction, and the corresponding measurement and reconstruction can obtain the distribution of axial flow velocity across the cross-section to be measured, or furtherly to obtain more accurate flow rate; Without departing from the spirit of the technical solution of the present invention, it should be included in the scope of the technical solution requested for protection of the present invention.

**Claims**

1. A method for measuring axial flow velocity or flow rate using acoustic sensors, **characterized by** comprising:

   emitting, by a first acoustic wave sensor set on one side of a cross-section of a fluid flow channel, acoustic waves to a fluid in the fluid flow channel, and receiving, by the first acoustic wave sensor, the acoustic waves reflected by an opposite wall of the fluid flow channel wherein the sound waves emitted by the first acoustic sensor are reflected by the opposite wall of the fluid flow channel and received by the first acoustic sensor, forming a first effective sound wave propagation path along the cross-section to be measured;
   determining a static sound velocity of the fluid in the fluid flow channel, including at least one of:

   a) measuring at least one fluid parameter, such as fluid temperature, to indirectly determine the static sound velocity of the fluid in the fluid flow channel,
   b) measuring the static sound velocity of the fluid in the fluid flow channel to directly determine the static sound velocity of the fluid in the fluid flow channel, and/or
   c) receiving, by a second acoustic wave sensor located on the opposite or similar side of the fluid flow channel to the first acoustic wave sensor, sound waves emitted from the first acoustic sensor, wherein the second acoustic sensor is offset by a certain distance along the axial direction of the fluid flow channel relative to the cross-section where the first acoustic wave sensor is located, wherein the sound waves emitted by the first acoustic sensor are received by the second acoustic sensor on or in the opposite side of the fluid flow channel, or reflected by the opposite wall of the fluid flow channel and received by the second acoustic sensor on or in the same side of the fluid flow channel, forming a second effective sound wave propagation path, which is preferably an inclined path;

   constructing - based on the sound wave propagation time of the first effective sound wave propagation path, optionally combined with the sound wave propagation time of the second effective sound wave propagation path when the static sound velocity is not determined in advance in the fluid flow channel - to construct, based on the principle of acoustic ray bending, a reconstruction model;
   determining the axial flow velocity or flow rate of the medium that has been reconstructed according to the reconstruction model.

2. The method for measuring axial flow velocity or flow rate using two acoustic sensors according to claim 1, **characterized in that** the formula for constructing the reconstruction model is expressed as follows:

$$t_{\mathrm{AC}} = \int_{l_{\mathrm{AB}}} \frac{1}{c_{i,xy}(x,y)}\, dl \qquad (1)$$

$$\Delta Y = \int_{t_{AC}} (c_{i,z}(x,y) + u(x,y)) dt \qquad (2)$$

$$c(x,y)^2 = c_{i,xy}(x,y)^2 + c_{i,z}(x,y)^2 \qquad (3)$$

$$t_{AB} = \int_{l_{AB}} \frac{1}{c_{xy}(x,y)} dl \qquad (4)$$

$$\int_{l_{AB}} u(x,y) dl = -\int_{l_{AB}} c_z(x,y) dl \qquad (5)$$

$$c(x,y)^2 = c_{xy}(x,y)^2 + c_z(x,y)^2 \qquad (6)$$

Among them, x, y and z represent the horizontal and vertical coordinates of the Cartesian coordinate system within the cross-section of the measurement area, and that along the axial direction of the channel, respectively; $t_{AC}$ represents the time it takes for the sound waves emitted by the first acoustic wave sensor to propagate to the second sound wave sensor;

$\Delta Y$ represents the axial offset distance of the installation position of the second acoustic wave sensor relative to the cross-section where the first acoustic wave sensor is located;

$c(x,y)$ represents the sound wave propagation velocity in the fluid medium under static conditions in the flow channel, $c_{i,xy}(x,y)$ are the radial components of the static sound velocity of the medium along the inclining curved sound path projected to the cross-section, and $c_{i,z}(x,y)$ are the axial components of the static sound velocity of the medium along the inclined sound path; $c_{xy}(x,y)$ is the radial component of the static sound velocity of the medium along the axially curved sound path across the cross-sectional direction, and $c_z(x,y)$ is the axial component of the static sound velocity of the medium along the axially curved sound path across the cross-sectional direction;

$t_{AB}$ represents the time it takes for the sound waves emitted by the first sound wave sensor to propagate to the opposite wall and reflect back to the first acoustic sensor;

$l_{AB}$ represents the linear integral path of the transverse direction sound path or the projection along the transverse section corresponding to the oblique or inclined sound path;

$u(x,y)$ represents the axial flow velocity of the measured fluid medium in the flow channel under the measured flow state;

When there is only one effective path with respect to both the first and the second acoustic paths, *i.e.* there is only a single first acoustic wave sensor and only a single second acoustic wave sensor, the measured static sound speed and flow velocity of the reconstructed medium are the average values across the measured cross-section.

3. The method for measuring axial flow velocity or flow rate using two acoustic sensors according to claim 1 or 2, **characterized in that** the fluid flow channel is a circular or rectangular pipe.

4. The method for measuring axial flow velocity or flow rate using acoustic sensors according to claim 1, 2 or 3, **characterized in that** the first acoustic sensor and the second acoustic sensor are installed in the inner or on the outer wall of the pipe.

5. The method for measuring axial flow velocity or flow rate using acoustic sensors according to any one of the preceding claims, **characterized in that**: the fluid flow channel is a jet, and when used to measure jet flow velocity or flow rate, it further comprises a third acoustic sensor, which is set on the opposite side of the cross-section where the first acoustic sensor is located.

6. The method for measuring axial flow velocity or flow rate using acoustic sensors according to claim 1, **characterized in that**: for a gas-solid two phase flow or liquid-solid two phase flow, the concentration of the dispersion phase (particles) is determined by using the reconstructed static sound velocity, with the particle size and the particle density remaining available and invariant; the functional relationship of the particle concentration relative to the static sound velocity is preferably determined by an experimental measurement, to form an empirical relationship.

7. For a fluid with its static sound velocity can be measured or calculated in advance, a method is claimed for measuring axial flow velocity or flow rate uses a single acoustic sensor, which method is **characterized by** comprising:

emitting, by the single acoustic wave sensor set on one side of a cross-section of a fluid flow channel, acoustic waves to a fluid in the fluid flow channel, and receiving, by the single acoustic wave sensor, the acoustic waves reflected by an opposite wall of the fluid flow channel wherein

the sound waves emitted by the single acoustic sensor are reflected by the opposite wall of the fluid flow channel and received by the single acoustic sensor, forming an effective sound wave propagation path along the cross-section to be measured;

constructing - based on the sound wave propagation time of the effective sound wave propagation path - to construct, based on the principle of acoustic ray bending, a reconstruction model;

determining the axial flow velocity or flow rate of the medium that has been reconstructed according to the reconstruction model.

8. The method for measuring axial flow velocity or flow rate using a single acoustic sensor according to claim 7, **characterized in that** the formula for constructing the reconstruction model is expressed as Eq.(7)

$$\overline{u} = \sqrt{c^2 - \left(\frac{L}{t}\right)^2} \qquad (7)$$

wherein u is an average flow velocity along a cross-section acoustic propagation diameter across the cross-section of the pipe to be measured; L is the length of the line connecting the acoustic sensor and the point on the opposite wall which reflects the sound waves transmitted by the acoustic sensor and finally received by the same acoustic sensor, and generally it is the diameter of the measured pipe at the measurement cross-section; $\Delta t$ is the total propagation time of the acoustic wave transmitting from the acoustic sensor via the pipe wall on the opposite side and reflecting back to the acoustic sensor, and c is the static sound velocity of a medium to be measured in the pipe.

9. The method for measuring axial flow velocity or flow rate using a single acoustic sensor according to claim 7 or 8, **characterized in that** the fluid flow channel is a circular or rectangular pipe.

10. A system for measuring axial flow velocity or flow rate using acoustic sensors, **characterized by**: comprising an acoustic signal data processing module, a first acoustic sensor, and an optional second acoustic sensor;

wherein the first acoustic sensor is configured to emit and receive acoustic waves, and is located on one side of the cross-section to be measured in the fluid flow channel, for emitting acoustic waves to the fluid and receiving the reflected sound waves;

wherein the second acoustic wave sensor is configured to receive acoustic waves, and is located on the opposite or similar side of the fluid flow channel to the first acoustic wave sensor, the second acoustic wave sensor is offset by a certain distance along the axial direction relative to the cross-section where the first acoustic wave sensor is located, and is configured to receive the acoustic waves emitted by the first acoustic wave sensor;

wherein the system is arranged such that the sound waves emitted by the first sound wave sensor are reflected by the opposite wall of the fluid flow channel and received by the first sound wave sensor, forming a first effective sound wave propagation path;

wherein the system is arranged such that the sound waves emitted by the first acoustic sensor are received by the second acoustic sensor on the opposite side, or reflected by the wall of the fluid flow channel on the opposite side and received by the second sound wave sensor on the same side, forming a second effective sound wave propagation path;

wherein the sound signal data processing module is configured to collect and process signals from the first acoustic sensor and the second acoustic sensor.

11. The system for measuring axial flow velocity or flow rate using acoustic sensors according to claim 10, **characterized in that**: the acoustic signal data processing module is equipped with a reconstruction program for processing the collected signals of the first acoustic sensor and the second acoustic sensor, and the formula of the reconstruction model algorithm is expressed as follows:

$$t_{\mathrm{AC}} = \int_{l_{\mathrm{AB}}} \frac{1}{c_{\mathrm{i},xy}(x,y)} dl \qquad (1)$$

$$\Delta Y = \int_{t_{\mathrm{AC}}} \left( c_{\mathrm{i},z}(x,y) + u(x,y) \right) dt \qquad (2)$$

$$c(x,y)^2 = c_{\mathrm{i},xy}(x,y)^2 + c_{\mathrm{i},z}(x,y)^2 \qquad (3)$$

$$t_{\mathrm{AB}} = \int_{l_{\mathrm{AB}}} \frac{1}{c_{xy}(x,y)} dl \qquad (4)$$

$$\int_{l_{\mathrm{AB}}} u(x,y) dl = -\int_{l_{\mathrm{AB}}} c_z(x,y) dl \qquad (5)$$

$$c(x,y)^2 = c_{xy}(x,y)^2 + c_z(x,y)^2 \qquad (6)$$

Among them, x, y and z represent the horizontal and vertical coordinates of the Cartesian coordinate system within the cross-section of the measurement area, and that along the axial direction of the channel, respectively; $t_{\mathrm{AC}}$ represents the time it takes for the sound waves emitted by the first sound wave sensor to propagate to the second sound wave sensor;

$\Delta Y$ represents the axial offset distance of the installation position of the second acoustic wave sensor relative to the cross-section where the first acoustic wave sensor is located;

$c(x,y)$ represents the sound wave propagation velocity in the fluid medium under static conditions in the flow channel, $c_{\mathrm{i},xy}(x,y)$ are the radial components of the static sound velocity of the medium along the inclining curved sound path projected to the cross-section, and $c_{\mathrm{i},z}(x,y)$ are the axial components of the static sound velocity of the medium along the inclined sound path; $c_{xy}(x,y)$ is the radial component of the static sound velocity of the medium along the axially curved sound path across the cross-sectional direction, and $c_z(x,y)$ is the axial component of the static sound velocity of the medium along the axially curved sound path across the cross-sectional direction;

$t_{\mathrm{AB}}$ represents the time it takes for the sound waves emitted by the first sound wave sensor to propagate to the opposite wall and reflect back to the first acoustic sensor;

$l_{\mathrm{AB}}$ represents the linear integral path of the transverse (radial or cross-section) direction sound path or the projection along the transverse section corresponding to the inclined or oblique sound path;

$u(x,y)$ represents the axial flow velocity of the measured fluid medium in the flow channel under the measured flow state.

12. The system for measuring axial flow velocity or flow rate using acoustic sensors according to claim 10, **characterized in that**: the acoustic signal data processing module is equipped with a reconstruction program for processing the collected signals of the single acoustic sensor, and the formula of the reconstruction model algorithm is expressed as follows:

$$\overline{u} = \sqrt{c^2 - \left(\frac{L}{t}\right)^2} \qquad (7)$$

wherein u is an average flow velocity along a cross-section acoustic propagation diameter across the cross-section of the pipe to be measured; L is the length of the line connecting the acoustic sensor and the point on the opposite wall which reflects the sound waves transmitted by the acoustic sensor and finally received by the same acoustic sensor, and generally it is the diameter of the measured pipe at the measurement cross-section; $\Delta t$ is the total propagation time of the acoustic wave transmitting from the acoustic sensor via the pipe wall on the opposite side and reflecting back to the acoustic sensor, and c is the static sound velocity of a medium to be measured in the pipe.

13. The system for measuring axial flow velocity or flow rate using an acoustic sensor according to claim 10 or 11, **characterized in that** the fluid flow channel is a circular or rectangular pipe or jet.

14. The system for measuring axial flow velocity or flow rate using an acoustic sensor according to claim 10 or 12, **characterized in that** the fluid flow channel is a circular or rectangular pipe.

15. The system for measuring axial flow velocity or flow rate using acoustic sensors according to claim 10, **characterized in that** the first acoustic sensor and the second acoustic sensor, or the single acoustic sensor, are installed in the inner or on the outer wall of the fluid flow channel.

**FIG. 1**

**FIG. 2**

FIG. 3

**FIG. 4A**

EP 4 632 332 A1

**FIG. 4B**

(a)

T, K

505

500

495

490

485

480

New method

True value

Time-difference method

0.5D

0.1D

0.01D

$\Delta Y$, m

FIG. 5A

FIG. 5B

FIG. 6A

**FIG. 6B**

Europäisches
Patentamt
European
Patent Office
Office européen
des brevets

# EUROPEAN SEARCH REPORT

**Application Number**

EP 25 17 0152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CN 119 716 137 A (LI YANQIN) 28 March 2025 (2025-03-28) * figures 1-3 * * claims 1,8,9,10 * * paragraph [0052] - paragraph [0058] * * paragraph [0072] - paragraph [0073] * * paragraph [0075] * * paragraph [0077] - paragraph [0090] * * equations (1) to (6); page 2 * * equation (11); page 6 * | 1-15 | INV. G01F1/66 G01F1/667 G01F1/74 |
| X | US 4 015 470 A (MORRISON RODERICK G) 5 April 1977 (1977-04-05) * figure 1 * * claim 1 * * page 7, line 1 - line 8 * * equations (1)-(6); page 7 - page 9 * * page 9, line 4 - line 7 * | 1,7,10 | |
| A | FAN JINHUI ET AL: "Review of ultrasonic measurement methods for two-phase flow", REVIEW OF SCIENTIFIC INSTRUMENTS, AMERICAN INSTITUTE OF PHYSICS, 2 HUNTINGTON QUADRANGLE, MELVILLE, NY 11747, vol. 92, no. 9, 8 September 2021 (2021-09-08), XP012259409, ISSN: 0034-6748, DOI: 10.1063/5.0049046 [retrieved on 2021-09-08] * part 2: Sound velocity spectrum method; page 9 * * associated text page 15; figure 17 * | 6 | **TECHNICAL FIELDS SEARCHED (IPC)** G01F G01P |

-----

-----

-/--

The present search report has been drawn up for all claims

| Place of search | Date of completion of the search | Examiner |
|---|---|---|
| The Hague | 15 August 2025 | Rambaud, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 17 0152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YONG YAN: "MASS FLOW MEASUREMENT OF BULK SOLIDS IN PNEUMATIC PIPELINES", MEASUREMENT SCIENCE AND TECHNOLOGY, IOP, BRISTOL, GB, vol. 7, no. 12, December 1996 (1996-12), pages 1687-1706, XP000681918, ISSN: 0957-0233, DOI: 10.1088/0957-0233/7/12/002 * 3.2.4 Acoustic/ultrasonic sensors; page 1695 * | 6 | |
| A | WO 88/08516 A1 (MICRONICS LTD [GB]) 3 November 1988 (1988-11-03) * equations (1)-(24); figures 1-2 * | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 15 August 2025 | Rambaud, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 0152

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2025

| Patent document cited in search report | | Publication date | Patent family member(s) | | Publication date |
|---|---|---|---|---|---|
| CN 119716137 | A | 28-03-2025 | NONE | | |
| US 4015470 | A | 05-04-1977 | NONE | | |
| WO 8808516 | A1 | 03-11-1988 | AU | 1709088 A | 02-12-1988 |
| | | | WO | 8808516 A1 | 03-11-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018108837 W
- US 10739174 B2
- WO 201880010719X A
- JP 7032842 B
- EP 3835731 A
- US 18663117 B
- CN 20241044670